# EUROPEAN PATENT APPLICATION

(11) **EP 4 738 612 A1**
(43) Date of publication of application: **06.05.2026**
(21) Application number: 25203397.2
(22) Date of filing: 19.09.2025
(51) Int. Cl.: H01Q 15/00, H01Q 15/24, H01Q 19/195, H01Q 3/46, H01Q 5/28

(54) **SYSTEM AND METHOD FOR REAL TIME MULTI-FREQUENCY OPERATION USING METASURFACE-BASED MECHANICALLY CONTROLLED TUNABLE POLARIZATION CONVERSION**

(30) Priority: 31.10.2024 IN 202421083564
(71) Applicant: Tata Consultancy Services Limited, Maharashtra (IN)
(72) Inventor: BANERJEE, AMARTYA, 700156 Kolkata (IN); NAVEEN, BHUKYA, 560066 Bangalore (IN); CHAKRAVARTY, TAPAS, 700091 Kolkata (IN); KUMAR, ACHANNA ANIL, 560009 Bangalore (IN); GHATAK, ROWDRA, 713209 Durgapur (IN)
(74) Representative: Goddar, Heinz J.

(57) **Abstract**

Polarization is a parameter that plays a pivotal role in communication during transmission and reception of signals. Presence of lumped elements along a signal path or around a region of interaction of incoming waves with surface may trigger distortion in the signals, leading to loss or damage of information. Generally, electronic lumped components are used but their functional abilities are limited during practical operations. The present disclosure addresses the unresolved problems of the conventional system by providing a system and method for real time multi-frequency operation using metasurface-based mechanically controlled tunable polarization conversion. In the present disclosure, a multi-band polarization converter design is provided whose operational parameters including (i) bands of operation, (ii) bandwidth, and (iii) number of bands are controlled together by modulating an air-gap of a reflective unit cell of a two-dimensional array structure of a metasurface using a motorized mechanical arrangement.

## Description

### CROSS-REFERENCE TO RELATED APPLICATIONS AND PRIORITY

The present application claims priority from Indian provisional patent application no. 202421083564, filed on October 31, 2024.

### TECHNICAL FIELD

The disclosure herein generally relates to the field of polarization conversion, and, more particularly, to a system and method for real time multi-frequency operation using metasurface-based mechanically controlled tunable polarization conversion.

### BACKGROUND

Polarization is a parameter that plays a pivotal role in communication during transmission and reception of signals. Polarization of a signal is defined by time-varying characteristics of its electric field vector at a fixed point in space. Often it becomes the requirement to effectively control and convert the polarization of electromagnetic (EM) signals for practical system applications. For security enhancement, inference reduction and protection from eavesdropping elements, polarization converters are proposed as effective first-line-of-defence solutions for RF communication. Two dimensional periodic arrays of specially designed unit cell elements, or more specifically metasurface designs are proposed as potential solutions to develop such effective and robust polarization converters for real-world applications. State-of-the-art RF communication systems demand not only multi-band or wideband converters but also such designs which offer real-time control over their performance. Generally, electronic lumped components are used to achieve real-time control over such metasurface designs, however this trend also limits its functional abilities during practical operations. Presence of lumped elements along a signal path or around a region of interaction of incoming waves with surface may trigger distortion in the signals, leading to loss or damage of information. Additionally, the presence of lumped elements indicates a need of meticulously designed biasing circuits which further adds to complexity and cost of the designs concerned.

### SUMMARY

Embodiments of the present disclosure present technological improvements as solutions to one or more of the above-mentioned technical problems recognized by the inventors in conventional systems. For example, in one embodiment, a mechanically controlled tunable polarization conversion system is provided. The mechanically controlled tunable polarization conversion system comprising: a base station in communication with a plurality of user equipment, wherein the base station comprises: a signal source that generates a plurality of communication signals; an antenna array comprising a plurality of antennas coupled to a two-dimensional array structure of a metasurface, wherein the two-dimensional array structure of the metasurface comprises a plurality of reflective unit cells arranged in a periodic manner with a predefined periodicity, wherein each of the plurality of reflective unit cells of the two-dimensional array structure of the metasurface comprises a first layer and a second layer separated by a tunable airgap therebetween, and the first layer of each of the plurality of reflective unit cells comprises a square patch diagonally enclosed by a first set of L-shaped resonators, and a second set of L-shaped resonators enclosing the first set of L-shaped resonators placed on a dielectric substrate at a predefined distance from the first set of L-shaped resonators; a motorized mechanical arrangement; and a controller unit that is operably connected to the antenna array, the two-dimensional array structure of the metasurface and the motorized mechanical arrangement, wherein the controller unit comprises: one or more data storage devices configured to store instructions; one or more communication interfaces; and one or more hardware processors operatively coupled to the one or more data storage devices via the one or more communication interfaces, wherein the one or more hardware processors are configured by the instructions to: control the motorized mechanical arrangement to translate a back and forth motion of the second layer of each of the plurality of reflective unit cells of the two-dimensional array structure of the metasurface such that the tunable air gap between the first layer and the second layer is modulated to control one or more operational parameters associated with polarization conversion of the plurality of communication signals generated by the signal source.

In another aspect, a processor implemented method is provided. The processor implemented method comprising: providing, via one more hardware processors, a base station in communication with a plurality of user equipment, wherein the base station comprises a signal source that generates a plurality of communication signals, and an antenna array comprising a plurality of antennas coupled to a two-dimensional array structure of a metasurface; receiving, via the one more hardware processors, the plurality of communication signals generated by the signal source on the two-dimensional array structure of a metasurface through the antenna array, wherein the two-dimensional array structure of the metasurface comprises a plurality of reflective unit cells arranged in a periodic manner with a predefined periodicity, and wherein each of the plurality of reflective unit cells of the two-dimensional array structure of the metasurface comprises a first layer and a second layer separated by a tunable airgap there between, and the first layer of each of the plurality of reflective unit cells comprises a square patch diagonally enclosed by a first set of L-shaped resonators, and a second set of L-shaped resonators enclosing the first set of L-shaped resonators placed on a dielectric substrate at a predefined distance from the first set of L-shaped resonator; and controlling, via the one more hardware processors, a motorized mechanical arrangement to translate a back and forth motion of the second layer of each of the plurality of reflective unit cells of the two-dimensional array structure of the metasurface such that the tunable air gap between the first layer and the second layer of each of the plurality of reflective unit cells is modulated to control one or more operational parameters associated with polarization conversion of the plurality of communication signals generated by the signal source.

In yet another aspect, a non-transitory computer readable medium is provided. The non-transitory computer readable medium comprising providing a base station in communication with a plurality of user equipment, wherein the base station comprises a signal source that generates a plurality of communication signals, and an antenna array comprising a plurality of antennas coupled to a two-dimensional array structure of a metasurface; receiving the plurality of communication signals generated by the signal source on the two-dimensional array structure of a metasurface through the antenna array, wherein the two-dimensional array structure of the metasurface comprises a plurality of reflective unit cells arranged in a periodic manner with a predefined periodicity, and wherein each of the plurality of reflective unit cells of the two-dimensional array structure of the metasurface comprises a first layer and a second layer separated by a tunable airgap there between, and the first layer of each of the plurality of reflective unit cells comprises a square patch diagonally enclosed by a first set of L-shaped resonators, and a second set of L-shaped resonators enclosing the first set of L-shaped resonators placed on a dielectric substrate at a predefined distance from the first set of L-shaped resonator; and controlling a motorized mechanical arrangement to translate a back and forth motion of the second layer of each of the plurality of reflective unit cells of the two-dimensional array structure of the metasurface such that the tunable air gap between the first layer and the second layer of each of the plurality of reflective unit cells is modulated to control one or more operational parameters associated with polarization conversion of the plurality of communication signals generated by the signal source.

In accordance with an embodiment of the present disclosure, the first layer of the metasurface represents a patch-on substrate layer and the second layer of the metasurface represents a ground plane layer.

In accordance with an embodiment of the present disclosure, the one or more operational parameters associated with polarization conversion comprises at least one of (i) a frequency of operation, (ii) number of frequency regions for operation, and (iii) bandwidth of operation.

In accordance with an embodiment of the present disclosure, controlling the one or more operational parameters associated with polarization conversion enables tuning and diversifying one or more operational abilities of a polarization converter to multi-frequency and multi-band performance in real time.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary block diagram of a mechanically controlled tunable polarization conversion system for real time multi-frequency operation using metasurface-based mechanically controlled tunable polarization conversion, according to some embodiments of the present disclosure.
FIGS. 2A and 2B illustrate an exemplary representation (not to scale) of a top view and a side view of a reflective unit cell for polarization conversion operation, according to some embodiments of the present disclosure.
FIG. 3 illustrates an exemplary representation (not to scale) of a perspective view of the reflective unit cell with a first layer and a second layer, according to some embodiments of the present disclosure.
FIG. 4 illustrates an exemplary representation (not to scale) of a 3×3 two-dimensional array structure of the metasurface for polarization conversion operation, according to some embodiments of the present disclosure.
FIG. 5 is an exemplary flow diagram illustrating a processor implemented method for real time multi-frequency operation using metasurface-based mechanically controlled tunable polarization conversion, according to some embodiments of the present disclosure.
FIG. 6 depicts a graphical representation illustrating polarization conversion performance of the reflective unit cell for smaller air gaps showing quad-band response, according to some embodiments of the present disclosure.
FIG. 7 depicts a graphical representation illustrating polarization conversion performance of the reflective unit cell for medium air gaps showing tri-band response, according to some embodiments of the present disclosure.
FIG. 8 depicts a graphical representation illustrating polarization conversion performance of the reflective unit cell for larger air gaps showing dual-band response, according to some embodiments of the present disclosure.
FIG. 9 depicts a graphical representation illustrating a polarization conversion performance of the reflective unit cell for air gaps showing single band response, according to some embodiments of the present disclosure.
FIGS. 10A and 10B depict graphical representations illustrating combined polarization conversion performances obtained from different airgaps collectively highlighting the tunability of the frequencies of operation with respect to air-gap dimension between the patch-on substrate layer and the ground plane layer.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following claims.

Polarization is a parameter that plays a pivotal role in communication during transmission and reception of signals. Polarization of a signal is defined by time-varying characteristics of its electric field vector at a fixed point in space. Often it becomes the requirement to effectively control and convert the polarization of electromagnetic (EM) signals for practical system applications. For security enhancement, inference reduction and protection from eavesdropping elements, polarization converters are proposed as effective first-line-of-defense solutions for RF communication. Two dimensional periodic arrays of specially designed unit cell elements, or more specifically metasurface designs are proposed as potential solutions to develop such effective and robust polarization converters for real-world applications. State-of-the-art RF communication systems demand not only multi-band or wideband converters but also such designs which offer real-time control over their performance. Generally, electronic lumped components are used to achieve real-time control over such metasurface designs, however this trend also limits its functional abilities during practical operations. Presence of lumped elements along a signal path or around a region of interaction of incoming waves with surface may trigger distortion in the signals, leading to loss or damage of information. Additionally, the presence of electronic lumped elements indicates a need of meticulously designed biasing circuits which further adds to complexity and cost of the designs concerned.

The present disclosure addresses the unresolved problems of the conventional system by providing a system and method for real time multi-frequency operation using metasurface-based mechanically controlled tunable polarization conversion. In the present disclosure, a multi-band polarization converter design is provided whose (i) bands of operation, (ii) bandwidth, and (iii) number of bands available for polarization conversion can all be tuned and controlled through simple mechanical arrangements. Through lumped components it was not possible to achieve control over such a multiple number of parameters. In the present disclosure, a mechanical control is provided to tune and diversify one or more operational abilities of a polarization converter to multi-frequency, multi-band performance. By modulating an airgap introduced in a design of a metasurface unit cell, the (a) bands of operation, (b) bandwidth and (c) number of bands together are controlled. This control diversity is unachievable through standard lumped component incorporation methods.

The multi-band polarization converter polarization converters as described in the present disclosure can be effectively used in communication for secured transmission bypassing interference and eavesdroppers in channel of propagation. Specifically for remote-sensing applications such converters can be deployed to sense and detect signals of interest. Metasurface-based polarization converters can be used to reduce radar cross-section of components for stealth purposes, under defense applications.

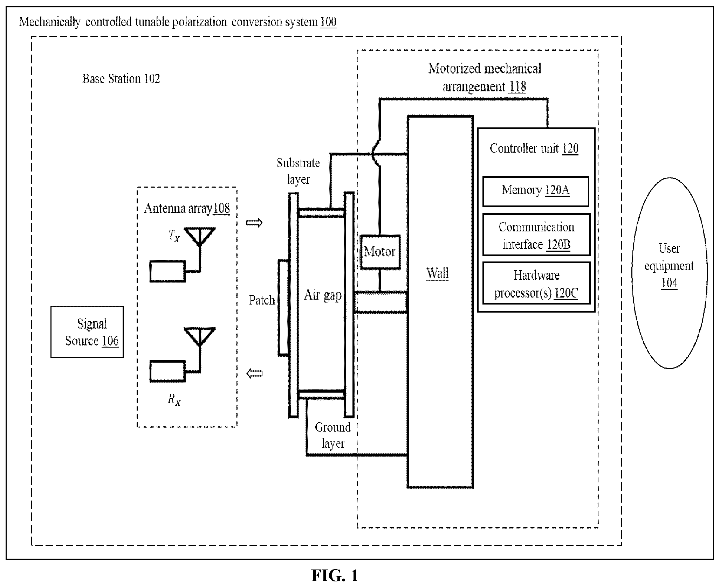

Referring now to the drawings, and more particularly to FIGS. 1 through 10B, where similar reference characters denote corresponding features consistently throughout the figures, there are shown preferred embodiments, and these embodiments are described in the context of the following exemplary system and/or method.

Reference numerals of one or more components of the communication system as depicted in the FIG.1 are provided in Table 1 below for ease of description:

**Table 1:**

| **Sr.No.** | **Component** | **Reference numeral** |
|---|---|---|
| 1 | Base station | 102 |
| 2 | User equipment | 104 |
| 3 | Signal source | 106 |
| 4 | Antenna array | 108 |
| 5 | Antnenna(s) | 108A |
| 6 | Metasurface | 110 |
| 7 | Reflective unit cell | 112 |
| 8 | Substrate layer (First layer) | 114 |
| 9 | Ground layer (Second layer) | 116 |
| 10 | Square patch | 114A |
| 11 | First set of L-shaped resonators | 114B |
| 12 | Second set of L-shaped resonators | 114C |
| 13 | Dielectric substrate | 114D |
| 14 | A motorized mechanical arrangement | 118 |
| 15 | Controller unit | 120 |
| 16 | Data storage device/Memory | 120A |
| 17 | Communication interface | 120B |
| 18 | Hardware processor | 120C |

FIG. 1 illustrates an exemplary block diagram of a mechanically controlled tunable polarization conversion system for real time multi-frequency operation using metasurface-based mechanically controlled tunable polarization conversion, according to some embodiments of the present disclosure.

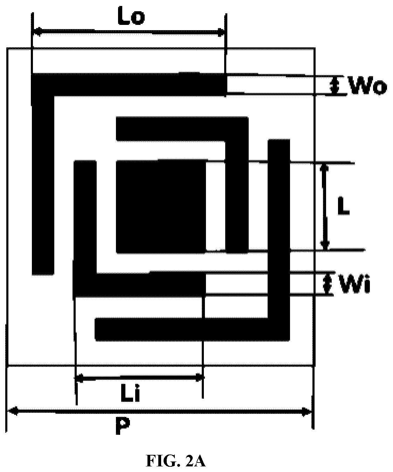

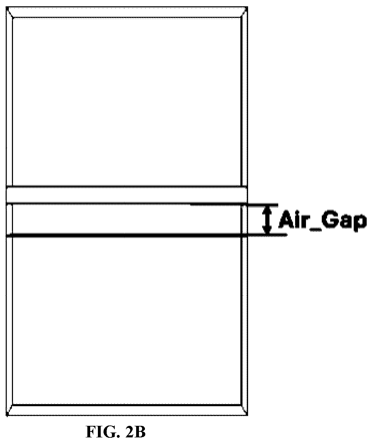

In an embodiment, the system 100 comprises a base station 102 in communication with a plurality of user equipment's 104. In an embodiment, the base station is operating as a transceiver which enables reception and transmission of communication signals to the plurality of the user equipment (UEs). In an embodiment, the user equipment may include a fixed user device or a mobile user device. In an embodiment, the communication signals are baseband signal which may include but not limited to a radio frequency (RF) signal, a microwave signal, a millimeter wave signal which are further modulated at the base station. In an embodiment, the base station 102 comprises a signal source and an antenna array comprising a plurality of antennas coupled to a two-dimensional array structure of a metasurface. The signal source generates a plurality of communication signals. The two-dimensional array structure of the metasurface comprises a plurality of reflective unit cells arranged in a periodic manner with a predefined periodicity. The predefined periodicity is represented as by P. In an embodiment, each of the plurality of reflective unit cells of the two-dimensional array structure of the metasurface comprises a first layer and a second layer separated by a tunable airgap between them. The first layer of each of the plurality of reflective unit cells comprises a square patch diagonally enclosed by a first set of L-shaped resonators, and a second set of L-shaped resonators enclosing the first set of L-shaped resonators placed on a dielectric substrate at a predefined distance from the first set of L-shaped resonators. This predefined distance is 2mm. FIGS. 2A and 2B illustrate an exemplary representation (not to scale) of a top view and a side view of a reflective unit cell for polarization conversion operation, according to some embodiments of the present disclosure. As shown in FIG. 2A, the reflective unit cell consists of L-shaped resonators around a square patch. The top layer features a square patch of side length L which is diagonally enclosed by two inner L-shaped resonators of dimensions *Lᵢ* (length) and *Wᵢ* (width) respectively. These inner L-shaped resonators are enclosed by another set of L-shaped resonators known as outer L-shaped resonators with dimensions *Lₒ* (length) and *Wₒ* (width) respectively. Table 2 below provides value of dimensions of reflective unit cell structure.

**Table 2**

| **Parameters** | ***Lₒ*** | ***Lᵢ*** | ***Wₒ=Wᵢ*** | ***L*** | **P** |
|---|---|---|---|---|---|
| **Value (in mm)** | 18.35 | 12.35 | 2 | 10.35 | 29.22 |

These two outer and inner L-shaped resonators are spaced 2mm apart on the FR-4 epoxy dielectric substrate with a thickness of *h* = 1.575 *mm,* relative permittivity *εᵣ* = 4.3 and a loss tangent *tanδ* = 0.025.

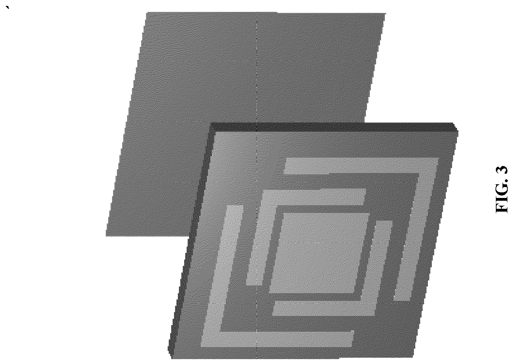

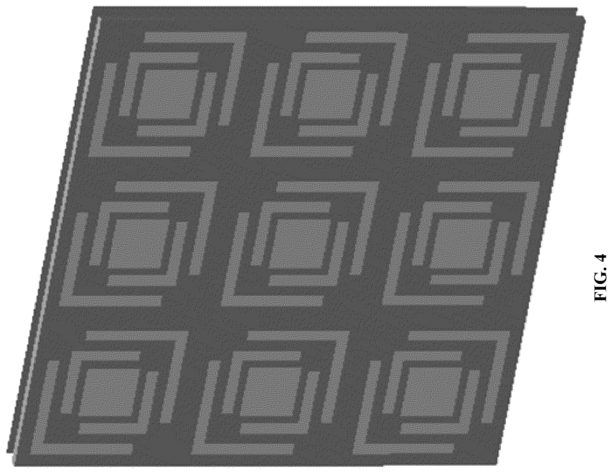

FIG. 3 illustrates an exemplary representation (not to scale) of a perspective view of the reflective unit cell with the first layer and the second layer, according to some embodiments of the present disclosure. In an embodiment, the first layer of the metasurface represents a patch-on substrate layer and the second layer of the metasurface represents a ground plane layer. As shown in FIG. 3, at the ground plane layer, a copper metal plate is placed with a conductivity of 5.8 × 10⁷ S/m and a thickness of 0.035 *mm.* As shown in FIG. 2B and FIG. 3, a sufficient air gap is provided in between the dielectric substrate and the ground plane layer. This refelctive unit cell is periodically placed with a periodicity P to generate a larger two-dimensional array structure of the metasurface. FIG. 4 illustrates an exemplary representation (not to scale) of a 3×3 two-dimensional array structure of the metasurface for polarization conversion operation, according to some embodiments of the present disclosure.

In an embodiment, the base station comprises a motorized mechanical arrangement that comprises of a motor and a wall which enables simple mechanical shifting of the ground plane layer. The base station further comprises a controller unit operably connected to the antenna array, the two-dimensional array structure of the metasurface and the motorized mechanical arrangement. The controller unit 120 further comprises one or more data storage devices or memory 120A configured to store instructions; one or more communication interfaces 120B; and one or more hardware processors 120C operatively coupled to the one or more data storage devices 120A via the one or more communication interfaces 120B. The one or more hardware processors 120C are configured by the instructions to control the motorized mechanical arrangement to translate a back and forth motion of the second layer of the each of the plurality of reflective unit cells of the two-dimensional array structure of the metasurface such that the tunable air gap between the first layer and the second layer is modulated to control one or more operational parameters associated with polarization conversion of the plurality of communication signals generated by the signal source. The one or more operational parameters associated with polarization conversion comprises at least one of (i) a frequency of operation, (ii) number of frequency regions for operation, and (iii) bandwidth of operation. In an embodiment, controlling the one or more operational parameters associated with polarization conversion enables tuning and diversifying operational abilities of a polarization converter to multi-frequency and multi-band performance in real time.

In an embodiment, the one or more hardware processors 120C can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In the context of the present disclosure, the expressions 'processors' and 'hardware processors' may be used interchangeably. In an embodiment, the one or more hardware processors 120C can be implemented in a variety of computing systems, such as laptop computers, notebooks, hand-held devices, workstations, mainframe computers, servers, a network cloud and the like.

In an embodiment, the communication interface(s) or input/output (I/O) interface(s) (120B) may include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface(s) can include one or more ports for connecting a number of devices to one another or to another server.

The one or more data storage devices or memory (120A) may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

The mechanically controlled tunable polarization conversion system describes a tunable nature of resonant frequencies for polarization conversion operation by varying the tunable air gap between the patch-on substrate layer (alternative referred as patch-loaded substrate) and the ground plane layer. By systematically adjusting the tunable air gap from 2mm to 20mm in 2mm increments, the mechanically controlled tunable polarization conversion system demonstrates significant changes in its resonant frequency characteristics. The ability to control the number of resonant bands and their corresponding frequencies makes the system of the present disclosure particularly valuable for applications requiring precise frequency responses. The changes in the air gap directly influence the electromagnetic coupling between the substrate and the ground plane, leading to shifts in the number of resonant bands and their frequencies.

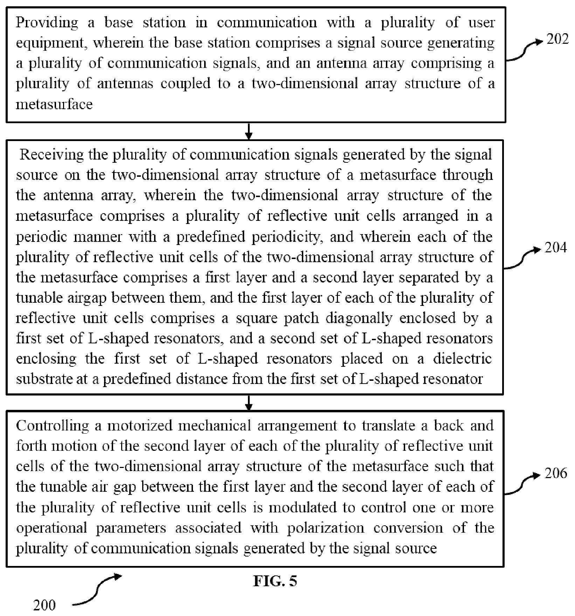

In an embodiment, the one or more hardware processors 120C are configured to a method, which can be carried out by using methodology, described in conjunction with FIG. 5, and use case examples.

FIG. 5 is an exemplary flow diagram illustrating a processor implemented method for real time multi-frequency operation using metasurface-based mechanically controlled tunable polarization conversion, according to some embodiments of the present disclosure. The steps of the method 200 of the present disclosure will now be explained with reference to the components or blocks of the communication system 100 as depicted in FIG. 1 and the steps of flow diagram as depicted in FIG. 5. Although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200 depicted in FIG. 2, in an embodiment of the present disclosure, at step 202, the one or more hardware processors 120C are configured to provide a base station in communication with a plurality of user equipment. The base station comprises a signal source that generates a plurality of communication signals, and an antenna array comprising a plurality of antennas coupled to a two-dimensional array structure of a metasurface. Further, at step 204, the one or more hardware processors 120C are configured to receive the plurality of communication signals generated by the signal source on the two-dimensional array structure of a metasurface through the antenna array. The two-dimensional array structure of the metasurface comprises a plurality of reflective unit cells arranged in a periodic manner with a predefined periodicity. In an embodiment, each of the plurality of reflective unit cells of the two-dimensional array structure of the metasurface comprises a first layer and a second layer separated by a tunable airgap there between, and the first layer of each of the plurality of reflective unit cells comprises a square patch diagonally enclosed by a first set of L-shaped resonators, and a second set of L-shaped resonators enclosing the first set of L-shaped resonators placed on a dielectric substrate at a predefined distance from the first set of L-shaped resonator. At step 206 of FIG. 5, the one or more hardware processors 120C are configured to control a motorized mechanical arrangement to translate a back and forth motion of the second layer of each of the plurality of reflective unit cells of the two-dimensional array structure of the metasurface such that the tunable air gap between the first layer and the second layer of each of the plurality of reflective unit cells is modulated to control one or more operational parameters associated with polarization conversion of the plurality of communication signals generated by the signal source.

### EXPERIMENTAL RESULTS

**In** the present disclosure, experiments were conducted which are described through graphical plots. It is observed from the experiments that the design of the system of the present disclosure operates within the frequency range of 2GHz to 7GHz, which readily covers the sub-6GHz bands of frequencies for 5G and beyond operations. Therefore, considering upcoming trends of 5G and 6G environments, such designs with real time control over need-based operations through minimal cost and maximal effectiveness, turn out to be extremely useful asset for addition into present ecosystem of RF communication equipment. By systematically adjusting the tunable air gap from 2mm to 20mm in 2mm increments, the system of the present disclosure demonstrates significant changes in its resonant frequency characteristics.

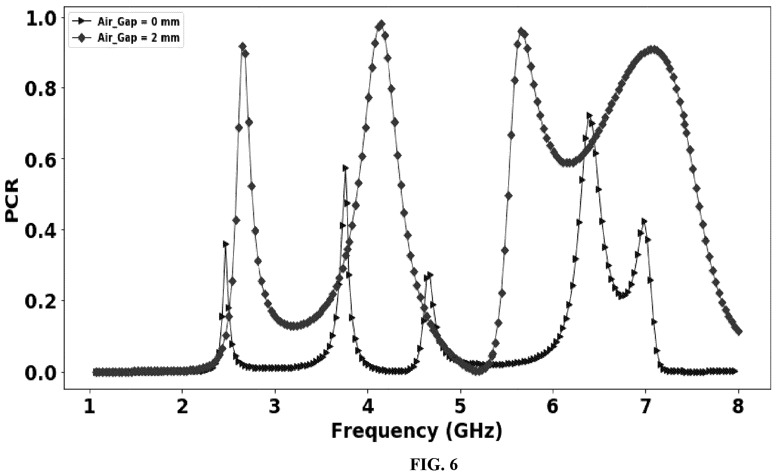

At an air gap of 2mm, the system 100 exhibits a Quad-band resonance, characterized by four distinct frequency bands within the 2 GHz to 7 GHz range. This multi-band resonance is attributed to strong electromagnetic coupling between the substrate layer and the ground plane layer due to their proximity. FIG. 6 depicts a graphical representation illustrating polarization conversion performance of the reflective unit cell for smaller air gaps showing quad-band response, according to some embodiments of the present disclosure.

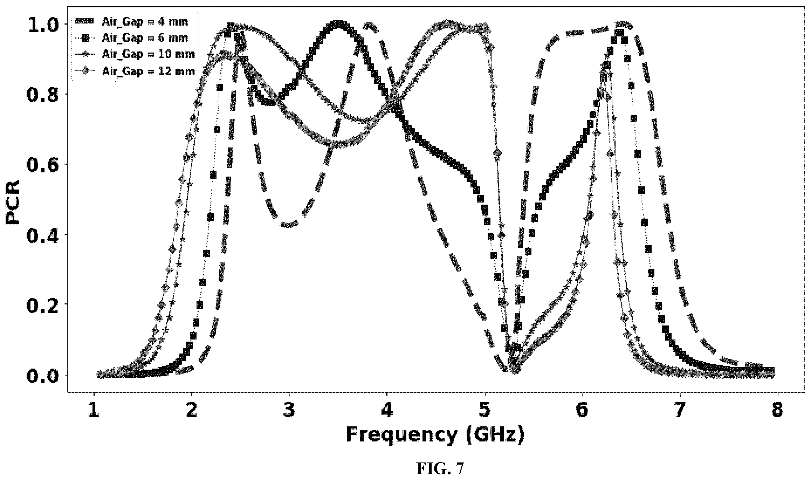

At an air gap of 4mm to 12mm, the system exhibits a tri-band resonance, characterized by three distinct frequency bands within the 2 GHz to 7 GHz range. As the gap increases, these multi-band resonances shift, driven by the electromagnetic coupling between the substrate layer and the ground plane layer due to their relative proximity. FIG. 7 depicts a graphical representation illustrating polarization conversion performance of the reflective unit cell for medium air gaps showing tri-band response, according to some embodiments of the present disclosure.

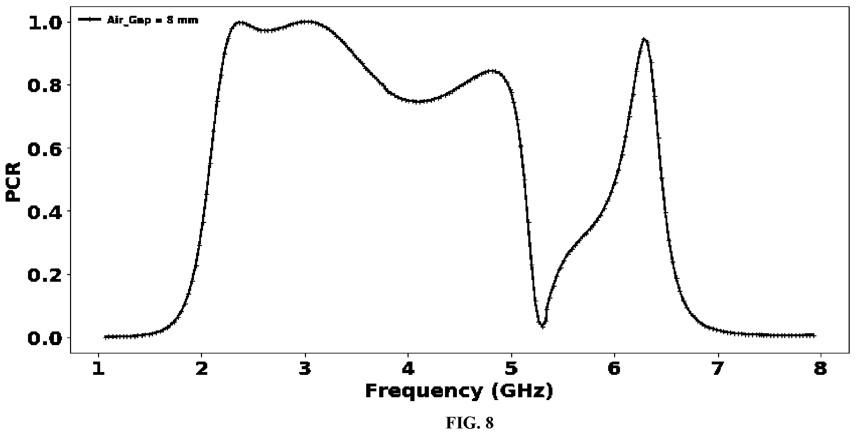

As the air gap is 8 mm, the system of the present disclosure transitions to a dual-band resonance. Weakening the electromagnetic interaction reduces the complexity of the resonant modes, resulting in two active frequency bands. These bands occur at higher frequencies compared to the tri-band configuration, reflecting sensitivity of the system of the present disclosure to changes in the air gap. FIG. 8 depicts a graphical representation illustrating polarization conversion performance of the reflective unit cell for larger air gaps showing dual-band response, according to some embodiments of the present disclosure.

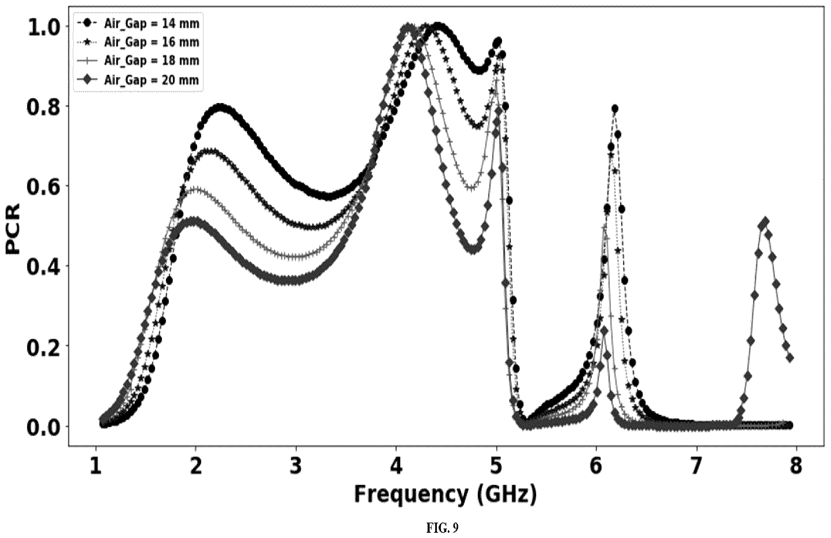

With further increases in the air gap, particularly between 14 mm and 20mm, the system of the present disclosure simplifies to a single-band resonance. The reduced electromagnetic coupling allows only one dominant resonant mode to emerge, with the frequency of this mode shifting higher as the air gap increases. FIG. 9 depicts a graphical representation illustrating polarization conversion performance of the reflective unit cell for air gaps showing single band response, according to some embodiments of the present disclosure.

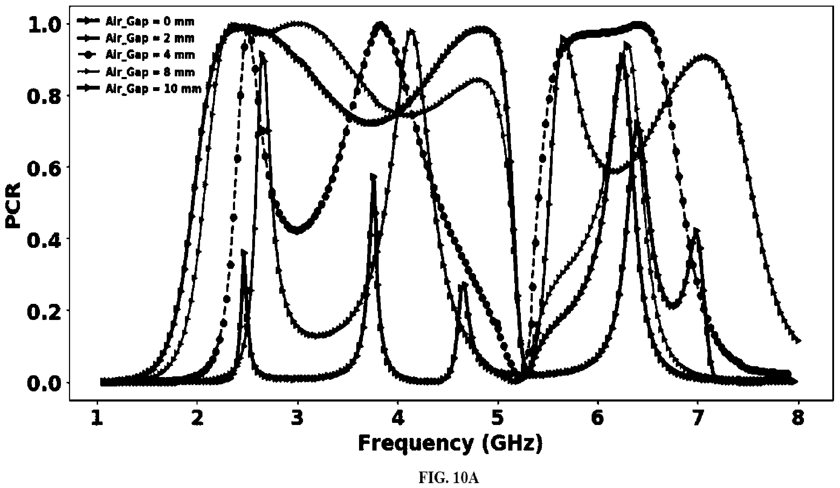

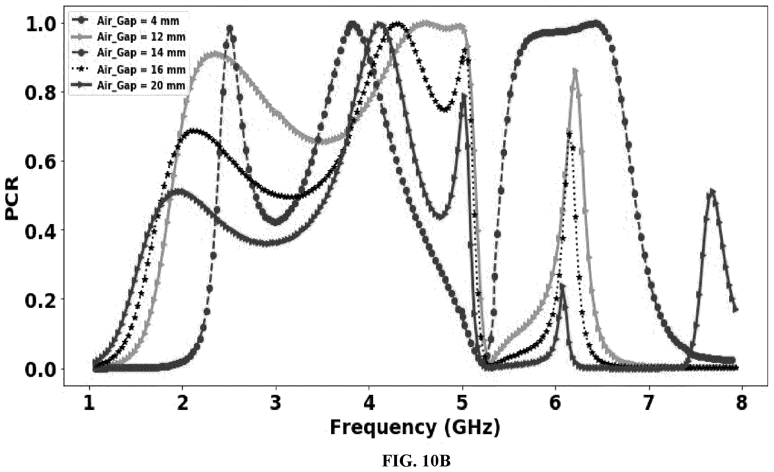

FIGS. 10A and 10B depict graphical representations illustrating combined polarization conversion performances obtained from different airgaps collectively highlighting the tunability of the frequencies of operation with respect to air-gap dimension between the patch-on substrate layer and the ground plane layer.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A mechanically controlled tunable polarization conversion system (100), comprising:
a base station (102) in communication with a plurality of user equipment (104), wherein the base station comprises:
a signal source (106) that generates a plurality of communication signals;
an antenna array (108) comprising a plurality of antennas (108A) coupled to a two-dimensional array structure of a metasurface (110), wherein the two-dimensional array structure of the metasurface (110) comprises a plurality of reflective unit cells (112) arranged in a periodic manner with a predefined periodicity, wherein each of the plurality of reflective unit cells (112) of the two-dimensional array structure of the metasurface (110) comprises a first layer (114) and a second layer (116) separated by a tunable airgap therebetween, and the first layer (114) of each of the plurality of reflective unit cells comprises a square patch (114A) diagonally enclosed by a first set of L-shaped resonators (114B), and a second set of L-shaped resonators (114C) enclosing the first set of L-shaped resonators (114B) placed on a dielectric substrate (114D) at a predefined distance from the first set of L-shaped resonators (114B);
a motorized mechanical arrangement (118); and
a controller unit (120) that is operably connected to the antenna array (108), the two-dimensional array structure of the metasurface (110) and the motorized mechanical arrangement (118), wherein the controller unit comprises:
one or more data storage devices (120A) configured to store instructions;
one or more communication interfaces (120B); and
one or more hardware processors (120C) operatively coupled to the one or more data storage devices (120A) via the one or more communication interfaces (120B), wherein the one or more hardware processors (120C) are configured by the instructions to:
control the motorized mechanical arrangement to translate a back and forth motion of the second layer of each of the plurality of reflective unit cells of the two-dimensional array structure of the metasurface such that the tunable air gap between the first layer and the second layer is modulated to control one or more operational parameters associated with polarization conversion of the plurality of communication signals generated by the signal source.

2. The mechanically controlled tunable polarization conversion system as claimed in claim 1, wherein the first layer of the metasurface represents a patch-on substrate layer and the second layer of the metasurface represents a ground plane layer.

3. The mechanically controlled tunable polarization conversion system as claimed in claim 1, wherein the one or more operational parameters associated with polarization conversion comprises at least one of (i) a frequency of operation, (ii) number of frequency regions for operation, and (iii) bandwidth of operation.

4. The mechanically controlled tunable polarization conversion system as claimed in claim 3, wherein controlling the one or more operational parameters associated with polarization conversion enables tuning and diversifying one or more operational abilities of a polarization converter to multi-frequency and multi-band performance in real time.

5. A processor implemented method (200), comprising:
providing (202), via one more hardware processors, a base station in communication with a plurality of user equipment, wherein the base station comprises a signal source that generates a plurality of communication signals, and an antenna array comprising a plurality of antennas coupled to a two-dimensional array structure of a metasurface;
receiving (204), via the one more hardware processors, the plurality of communication signals generated by the signal source on the two-dimensional array structure of a metasurface through the antenna array, wherein the two-dimensional array structure of the metasurface comprises a plurality of reflective unit cells arranged in a periodic manner with a predefined periodicity, and wherein each of the plurality of reflective unit cells of the two-dimensional array structure of the metasurface comprises a first layer and a second layer separated by a tunable airgap there between, and the first layer of each of the plurality of reflective unit cells comprises a square patch diagonally enclosed by a first set of L-shaped resonators, and a second set of L-shaped resonators enclosing the first set of L-shaped resonators placed on a dielectric substrate at a predefined distance from the first set of L-shaped resonator; and
controlling (206), via the one more hardware processors, a motorized mechanical arrangement to translate a back and forth motion of the second layer of each of the plurality of reflective unit cells of the two-dimensional array structure of the metasurface such that the tunable air gap between the first layer and the second layer of each of the plurality of reflective unit cells is modulated to control one or more operational parameters associated with polarization conversion of the plurality of communication signals generated by the signal source.

6. The processor implemented method as claimed in claim 5, wherein the first layer of the metasurface represents a patch-on substrate layer and the second layer of the metasurface represents a ground plane layer.

7. The processor implemented method as claimed in claim 5, wherein the one or more operational parameters associated with polarization conversion comprises at least one of (i) a frequency of operation, (ii) number of frequency regions for operation, and (iii) bandwidth of operation.

8. The processor implemented method as claimed in claim 7, wherein controlling the one or more operational parameters associated with polarization conversion enables tuning and diversifying one or more operational abilities of a polarization converter to multi-frequency and multi-band performance in real time.

9. One or more non-transitory machine-readable information storage mediums comprising one or more instructions which when executed by one or more hardware processors cause:
providing, a base station in communication with a plurality of user equipment, wherein the base station comprises a signal source that generates a plurality of communication signals, and an antenna array comprising a plurality of antennas coupled to a two-dimensional array structure of a metasurface;
receiving, the plurality of communication signals generated by the signal source on the two-dimensional array structure of a metasurface through the antenna array, wherein the two-dimensional array structure of the metasurface comprises a plurality of reflective unit cells arranged in a periodic manner with a predefined periodicity, and wherein each of the plurality of reflective unit cells of the two-dimensional array structure of the metasurface comprises a first layer and a second layer separated by a tunable airgap there between, and the first layer of each of the plurality of reflective unit cells comprises a square patch diagonally enclosed by a first set of L-shaped resonators, and a second set of L-shaped resonators enclosing the first set of L-shaped resonators placed on a dielectric substrate at a predefined distance from the first set of L-shaped resonator; and
controlling, a motorized mechanical arrangement to translate a back and forth motion of the second layer of each of the plurality of reflective unit cells of the two-dimensional array structure of the metasurface such that the tunable air gap between the first layer and the second layer of each of the plurality of reflective unit cells is modulated to control one or more operational parameters associated with polarization conversion of the plurality of communication signals generated by the signal source.

10. The one or more non-transitory machine-readable information storage mediums as claimed in claim 9, wherein the first layer of the metasurface represents a patch-on substrate layer and the second layer of the metasurface represents a ground plane layer.

11. The one or more non-transitory machine-readable information storage mediums as claimed in claim 9, wherein the one or more operational parameters associated with polarization conversion comprises at least one of (i) a frequency of operation, (ii) number of frequency regions for operation, and (iii) bandwidth of operation.

12. The one or more non-transitory machine-readable information storage mediums as claimed in claim 11, wherein controlling the one or more operational parameters associated with polarization conversion enables tuning and diversifying one or more operational abilities of a polarization converter to multi-frequency and multi-band performance in real time.
